# EUROPEAN PATENT SPECIFICATION

(11) **EP 4 452 905 B1**
(45) Date of publication and mention of the grant of the patent: **14.01.2026**
(21) Application number: 22741435.6
(22) Date of filing: 20.06.2022
(51) Int. Cl.: C01F 1/00, A01N 63/20, A01N 63/22, A01N 63/27, A01N 63/30, C05F 3/00, C05F 11/08, C05F 17/00, C05G 3/80, C05G 5/12, C05B 7/00, C05F 9/04, C05F 17/10, C05F 17/20, A01N 63/38, A01P 21/00, C05F 1/00

(54) **METHOD OF PRODUCTION OF A SOIL CONDITIONER AND THE SOIL CONDITIONER PRODUCED BY THE METHOD**
VERFAHREN ZUR HERSTELLUNG EINES BODENVERBESSERUNGSMITTELS UND DAS SO HERGESTELLTE BODENVERBESSERUNGSMITTEL
PROCÉDÉ DE PRODUCTION D'AMENDEMENT ET AMENDEMENT PRODUIT PAR LE PROCÉDÉ

(30) Priority: 22.12.2021 CZ 20210592
(43) Date of publication of application: 30.10.2024
(73) Proprietor: agriCARBON s.r.o., 612 00 Brno (CZ)
(72) Inventor: MAROUSEK, Josef, 37001 Litvínovice (CZ); KOLÁR , Ladislav, 37001 eské Bud jovice (CZ); STRUNECKÝ, Otakar, 37001 eské Bud jovice (CZ); KÁNA, Jan, 39001 Tábor (CZ)
(74) Representative: Zemanová, Veronika
(86) International application number: PCT/CZ2022/000028
(87) International publication number: WO 2023/116953

(56) References cited:
- WO-A1-2012/038740
- CN-A- 110 668 876
- CN-A- 111 646 845
- US-A1- 2020 140 350

## Description

### Technical Field

The invention concerns a means for improvement of soil properties, for plant fertilising and nutrition.

### Background Art

The vast majority of farmland is farmed in intensive ways that aim to maximise crop yields, regardless of the consequences for soil health. The massive use of mineral fertilisers and plant protection products is causing a major loss of micro- and macro-organisms in the soil. Yet their role in creating natural soil fertility is irreplaceable. As a result of the lack of organisms in the soil, cultivated plants are completely dependent on artificial fertilisers.

The application of mineral fertilisers is associated with the frequent repeated driving of agricultural machinery across the field, which negatively affects the physical properties of the soil. The soil layers are compacted. This negatively affects the ability of rainwater to soak into the soil and leads to massive water erosion.

This negative trend in agricultural practice can be reversed by adopting gentle practices that supply the soil with organic matter as a source of energy for soil micro-organisms and material that improves soil structure. Such material should allow applications with standard agricultural technology used in intensive farming.

Microgranular fertilizers have been commonly used in agriculture since the latter half of the 20th century. They enable more efficient crop establishment through more accurate nutrient dosing, better use of soil protection products and other agrochemicals. Today's farming technology allows microgranular fertilisers to be applied at virtually any, yet precise, distance from the seed - directly into the seedbed to the seed. This increases the efficiency of the use of active substances. The interaction of seed and fertiliser allows a "starter effect" to be triggered at the beginning of the growing season, which enables future crops to quickly develop a robust root system. This allows them to make better use of spring moisture, quickly build up leaf area and thereby suppress competing weeds. Granular fertiliser increases crop yields and also reduces the cost of weed control applications.

In the production of microgranular fertiliser, minerals such as sepiolite, which belong to raw materials from non-renewable natural resources, are used as basic substances. Their production is energy-intensive. And yet the availability of the nutrients contained in such microgranular fertilisers for plant nutrition is problematic.

Biochar is a charred type of biomass. It is used, among other things, as a soil conditioner to improve physical properties of soil and its natural fertility. Biochar is usually obtained by thermal reduction of biomass at temperatures between 450 and 800 °C. Its composition depends on the material from which it is made. It usually contains between 50 and 90 % by weight of stable carbon and, in addition to carbon, usually about 1 % by weight of phosphorus, 2 % by weight of potassium, 6 % by weight of calcium and 1,5 % by weight of magnesium.

The use of biochar as part of soil conditioners and granular fertilisers is known from the state of the art.

CN 105646047 (A) discloses a water- and steam-proof biochar-based compound fertilizer and a method for preparation thereof. The granular fertiliser consists of the following ingredients, stated in parts by weight: 15 parts of biochar powder, 30 parts of urea, 30 parts of monoammonium phosphate, 22 parts of potassium sulphate and 20 to 30 parts of water, with a maximum of 1 part of binders, including starch in gelatine form. The desired characteristic of this fertiliser, i.e. the gradual infiltration of nutrients into the soil, is given by the binder, which is in the nature of a potting compound. The biochar content is relatively low and its ability to slowly release the absorbed inorganic nutrients into soil is not utilised.

CN112390691 (A) discloses a soil conditioner consisting of bamboo charcoal powder and an organic fertiliser, wherein the weight ratio of the bamboo charcoal powder to the organic fertiliser is 1:2.4 to 1:14. The way in which the two main raw materials are combined, and the soil micro-organisms are not mentioned.

CN107573163 (A) describes an acidic soil conditioner for plant nutrition. It consists of a mixture of base material and auxiliary material, wherein the base material consists of 45 to 65 parts by weight of brewer's malt, 40 to 60 parts of peat soil, 40 to 50 parts of Chinese medicine residues, 35 to 45 parts of soybean meal powder, 30 to 40 parts of straw powder, 25 to 35 parts of edible fungi residues, 24 to 36 parts of pineapple paste, 20 to 30 parts of apple paste, 15 to 25 parts of silkworm excrements, 10 to 16 parts of proteolytic enzymes, 4 to 8 parts of azotobacter, 5 to 9 parts of rhizobia, 4 to 6 parts of potassium-decomposing bacteria, 6 to 8 parts of cellulolytic bacteria, 4 to 6 parts of antibiotic-producing bacteria and 60 to 80 parts of water with which the previous ingredients are mixed and fermented, the fermentation process not being defined. Then, the auxiliary materials are added, namely 40 to 60 parts of earthworm excrements, 25 to 35 parts of biochar residues, 20 to 30 parts of urea, 18 to 28 parts of vegetable ash, 10 to 20 parts of lime powder, 10 to 20 parts of urea-iron complex and 10 to 20 parts of chelated zinc. The described complex contains large amounts of defined types of organic matter and bacteria, which are co-fermented.

This mixture, apart from bacteria, only contains labile organic matter, and so during fermentation neither the nutrients nor the colonising bacteria can be fixed into a fixed structure in which the nutrients and bacteria can be bound or able to colonise the root systems. In addition, in at least some cases, the components used are generally difficult to get or require significant energy inputs. Also, the contribution of carbon from biomass is minor and therefore the application of this conditioner cannot be expected to improve soil structure.

US 2020/140350 A1 relates to a composition, system and method for the promotion of soil health, and hence plants grown in the soil treated with the composition. Said composition comprises: a base; nitrogen-fixing bacteria; and fungi, wherein the nitrogen-fixing bacteria and fungi are present in the composition in a live state. The composition has particular application to the improvement of soils that are deficient in or depleted of nutrients, minerals, microorganisms or moisture (or any one or more of these), and are in need of rehabilitation.

The objective of the present invention is to provide a method of producing a bio-based organic fertilizer in the form of microgranules which, when released slowly, ensure the bioavailability of organic nutrients from the earliest stages of plant development. The purpose is for the microgranule fertilizer to replace basic fertilization to a large extent, not only to promote growth in the early stages of vegetation.

### Disclosure of the Invention

The present invention concerns a method of producing a granular soil conditioner based on a mixture of biochar and organic fertilizer, wherein the conditioner is endowed with bacteria, mycorrhizal fungi and a myco-parasitic fungus. The method comprises the following steps:
- mixing the biochar obtained by thermal reduction of plant biomass or animal bones with animal excrements at a weight ratio of 1 part of biochar to 0.1 to 0.4 part of excrement dry matter, adding to this base a mixture of soil bacteria including at least two of the following genera:
   bacteria of the Rhizobia genus,
   nitrification bacteria of the Azospirillum or Azotobacter genus,
   bacteria of the Pseudomonas genus,
   bacteria of the Bacillus genus,
   the dry matter weight of which, at a concentration of CFU 10⁹, being 0.2 to 0.5 % of the weight of the dry matter in the base,
- topping the bacteria-endowed base up with water with a weight of not more than double the weight of the bacteria-endowed base and letting the mixture ferment for at least 5 days,
- thereupon draining the excess water off and drying the base with bacteria for the water content to be reduced to not more than 20 % by weight, after which a mixture of spores of fungi belonging to at least two representatives of the groups Trichoderma, Arbuscular mycorrhizal fungi, Ectomycorrhizal fungi is added to the mixture of the base with bacteria in a total quantity corresponding to 0.2 to 1 wt% of the dry matter weight of the mixture of the base with bacteria,
- thereupon mixing the thus prepared compound thoroughly.

Preferably, a mixture of soil bacteria of the Azospirillum or Azotobacter genus and the Bacillus genus may be added to the base, wherein a mixture of spores of myco-parasitic fungi such as the Trichoderma or Pythium genera, and arbuscular fungi such as the Glomus genus, or ectomycorrhizal fungi such as the Pisolithus, Scleroderma or Rhizopogon genera are added to the base-bacteria mixture. Alternatively, fungi forming ericoid mycorrhizae with heather plants are added.

A particularly preferrable method consists in adding a mixture of soil bacteria to the base in a weight ratio of
25 % of the Rhizobia genus bacteria,
25% of nitrification bacteria of the Azospirillum or Azotobacter genus,
25 % of the Pseudomonas genus bacteria,
25 % of the Bacillus genus bacteria,
whereupon the base endowed with bacteria is supplemented before fermentation with water equal in weight to that of the base with bacteria, and whereupon a mixture of fungal spores is added to the mixture of base with bacteria in the following weight ratio: 50 % of Arbuscular mycorrhizal fungi, 25 % of Ectomycorrhizal fungi and 25 % of Myco-parasitic fungi such as Trichoderma.

The base may preferably be complemented with 0.1 to 0.3 parts of a mineral fertiliser.

In the manufacture of the conditioner in granular form, starch in an amount of 4 to 6 % of the dry matter weight of the base-bacteria mixture is mixed with water at boiling point temperature, and this starch suspension is added to the base-bacteria mixture after cooling, and this mixture is granulated in a granulator to form granules with a diameter of 1 to 5 mm.

The said task is also fulfilled by a soil conditioner based on a mixture of biochar and organic fertiliser produced by any of the above methods, comprising a mixture of soil bacteria belonging to at least three of the following groups: Rhizobia, Azospirillum or Azotobacter, Pseudomonas and Bacillus, and further comprising a mixture of fungal spores belonging to at least three of the following groups: Arbuscular mycorrhizal fungi, Ectomycorrhizal fungi, Myco-parasitic fungi.

In a preferred embodiment the conditioner takes the form of granules with starch as the binder.

Thanks to the presence of biochar, the conditioner acts as a soil conditioner, which contributes to improving water and air management and soil structure. An important component of the conditioner is soil biota in the form of rhizobacteria belonging to several strains that fix airborne nitrogen, make organic nutrients available to plants and protect them against pests and stress. In addition to bacteria, the conditioner also contains spores of mycorrhizal fungi that live in symbiosis with the plant roots. They extract carbon from them and in return provide nutrients in an optimally available form. Both of these components of the soil biota ensure that the natural soil fertility is restored, which in effect makes it possible to reduce or even completely eliminate additional fertilisation with artificial fertilisers. The conditioner, through the use of biochar, contributes synergistically to carbon sequestration and is therefore a tool for so-called Pyrogenic Carbon Capture and Storage. The carbon in biochar was originally part of the CO2 molecule in the air, which was broken down by the process of photosynthesis, after which the carbon was stored in the body of the plant from whose biomass the biochar was derived.

### Brief Description of Drawings

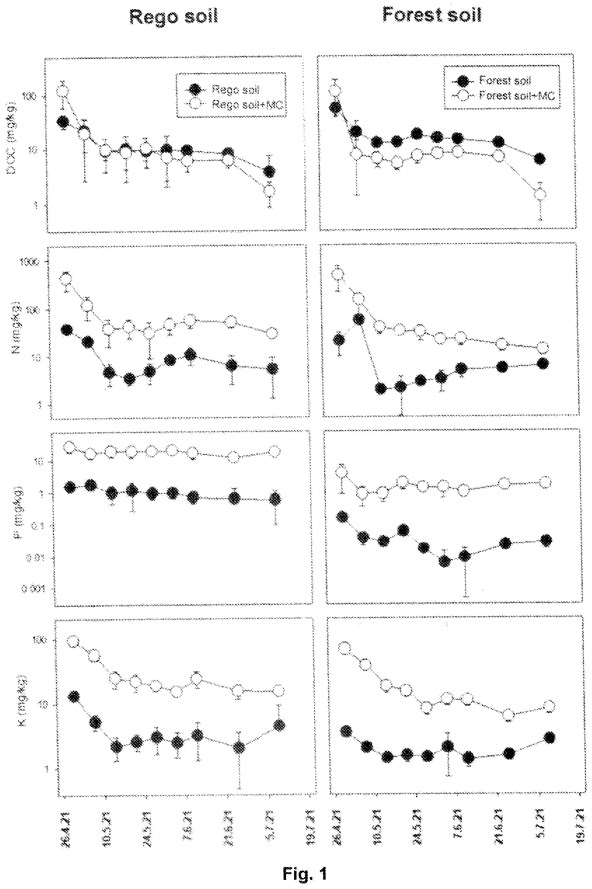

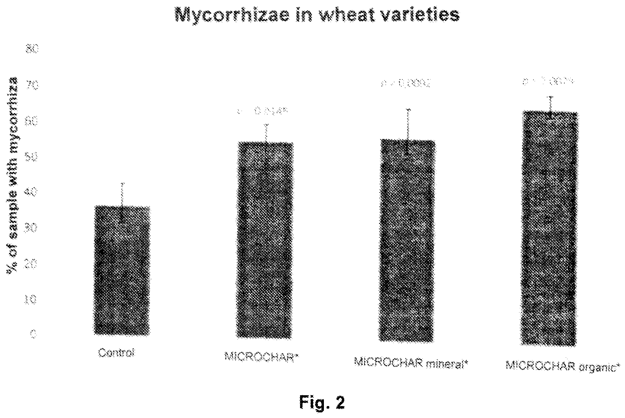

The results of the application of the conditioner made according to the method of the present invention will be documented in the drawings, in which Fig. 1 is a table showing the results of incubation vessel experiments performed with samples of the conditioner made according to the method described in the following examples, and Fig. 2 is a graph showing the development of mycorrhizae on wheat root systems when these samples are applied.

### Modes for Carrying out the Invention

### Example 1

The biochar obtained by thermal reduction of softwood at 550 °C was pulverized into particles of 1 to 15 mm in size.

For the production of the fertiliser, a mixture was prepared as described above with the following composition by weight
- 1 part of biochar,
- 0.2 part of vermicompost leach concentrate (Vermi-tea)
- 0.02 part of a mixture of bacteria of the Rhizobia genus, the Azotobacter genus, the Pseudomonas genus and the Bacillus genus, each represented in equal parts
- 0.05 part of spores of the Glomus sp. (50 %), and the Trichoderma sp. (50 %)

The mixture of biochar, vermicompost (excreta of earthworms) and bacterial mixture was topped up with water in a weight ratio of 1:1.5 and fermented for seven days. Subsequently, excess water was drained off and after cooling, a suspension of 0.1 part of starch mixed with boiling water in a 1:1 weight ratio and mycorrhizal fungal spores were added. After thorough mixing, the mixture was granulated on a granulation press into granules with a diameter of 3 mm. The sample was labelled as **MicroCHAR + Vermitea.**

### Example 2

The biochar obtained by thermal reduction of softwood at 550 °C was pulverized into particles of 1 to 15 mm in size.

For the production of the fertiliser, a mixture was prepared as described above with the following composition by weight
- 1 part of biochar,
- 0.4 part of poulter excrement dry matter,
- 0.02 part of a mixture of bacteria of the Rhizobia genus, the Azotobacter genus, the Pseudomonas genus and the Bacillus genus, each represented in equal parts
- 0.05 part of spores of the Glomus sp. (50 %), and the Trichoderma sp. (50 %)

The mixture of biochar, poultry excrements and bacterial mixture was topped up with water in a weight ratio of 1:1.5 and fermented for seven days. Subsequently, excess water was drained off and after cooling, a suspension of 0.1 part of starch mixed with boiling water in a 1:1 weight ratio and mycorrhizal fungal spores were added. After thorough mixing, the mixture was granulated on a granulation press into granules with a diameter of 3 mm. The sample was labelled as **MicroCHAR Organic.**

### Example 3

The biochar obtained by thermal reduction of softwood at 550 °C was pulverized into particles of 1 to 15 mm in size.

For the production of the fertiliser, a mixture was prepared as described above with the following composition by weight
- 1 part of biochar,
- 0.2 part of poultry excrement dry matter
- 0.2 part of ammonium phosphate (NH₄)₃PO₄)
- 0.02 part of a mixture of bacteria of the Rhizobia genus, the Azotobacter genus, the Pseudomonas genus and the Bacillus genus, each represented in equal parts
- 0.05 part of spores of the Glomus sp. (50 %), and the Trichoderma sp. (50 %)

The mixture of biochar, poultry excrements and bacterial mixture was topped up with water in a weight ratio of 1:1.5 and fermented for seven days. Subsequently, excess water was drained off and 0.2 part of ammonium phosphate was added. After cooling, a suspension of 0.1 part of starch mixed with boiling water in a 1:1 weight ratio and mycorrhizal fungal spores were added. After thorough mixing, the mixture was granulated on a granulation press into granules with a diameter of 3 mm. The sample was labelled as **MicroCHAR**

### Mineral.

To assess the effects of biochar alone in the conditioner, a soil conditioner not according to the invention was prepared by the following method:
The biochar obtained by thermal reduction of softwood at 550 °C was pulverized into particles of 1 to 15 mm in size.

For the production of the fertiliser, a mixture was prepared as described above with the following composition by weight
- 1 part of biochar,
- 0.02 part of a mixture of bacteria of the Rhizobia genus, the Azotobacter genus, the Pseudomonas genus and the Bacillus genus, each represented in equal parts
- 0.05 part of Arbuscular mycorrhizal fungal spores (50 %), Trichoderma (50 %)

After cooling, a suspension of 0.2 part of starch mixed with boiling water in a 1:1.5 weight ratio and mycorrhizal fungal spores were added. The resulting mixture was subsequently granulated on a granulation press into granules with a diameter of 3 mm. The sample was labelled as **MicroCHAR.**

Conditioner samples produced by the described methods were subsequently tested in laboratories to determine nutrient availability, both by the Mehlich III certified method and by incubation vessel experiments. The Mehlich III methodology is a certified methodology for sampling the content of substances in soil according to Annex 2 to Decree No 275/1998 Coll.

The testing by the Mehlich III method yielded the results shown in tables 2 and 3:

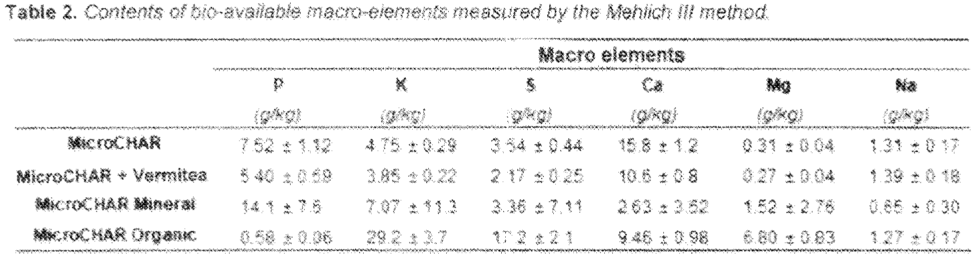

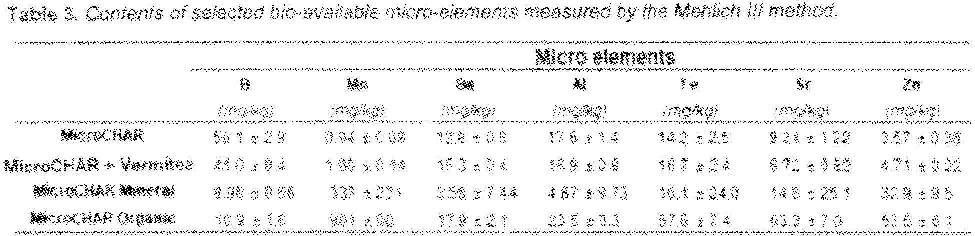

Subsequently, an incubation experiment was performed in which the conditioner prepared according to Example 1 was applied to the test containers together with two types of problematic soils - see the tables in Fig. 1. The sub-tables show diagrams of the uptake of each nutrient from the two soil types. The diagrams compare the results of the samples in which the conditioner is applied with control soil samples. Two types of problematic soils with a lack of organic matter and therefore low retention capacity and reduced nutrient content were used. They were agricultural soils from the Polabi region - **Rego soil** (with sand fraction content above 2 mm ≈ 85 %), and **Forest soil** (the mineral horizon) from around the Jevany municipality, respectively.

The sub-tables show the measurement dates on the x-axis and the mass of the individual elements N, P, K taken from the soil between measurements on the *y*-axis, where DOC is the amount of leached carbon. Therein, the lines with solid circles refer to the soil samples with the applied conditioner and the lines with empty circles to the control samples.

The results of cumulative extraction of individual nutrients show that during the period of about 2 months of the incubation, in the case of the treated agricultural Rego soil and the treated Forest soil, about 8times more nitrogen and potassium and 11times and 15times more N and K, respectively, were extracted. For phosphorus there was a 30-fold increase in the case of Rego soil and even a 98-fold increase in the case of Forest soil. For the other macro-nutrients, the increase was between two and 12 times.

Further testing of the conditioner was carried out in the form of field trials in the season of 2021. Applications to spring wheat and maize were tested, each crop in three repetitions with fertiliser variants (MicroCHAR mineral, MicroCHAR organic and MicroCHAR). The conditioner was always applied at a rate of 80 kg per hectare during sowing. No fertiliser or protective substance was applied during the vegetation period.

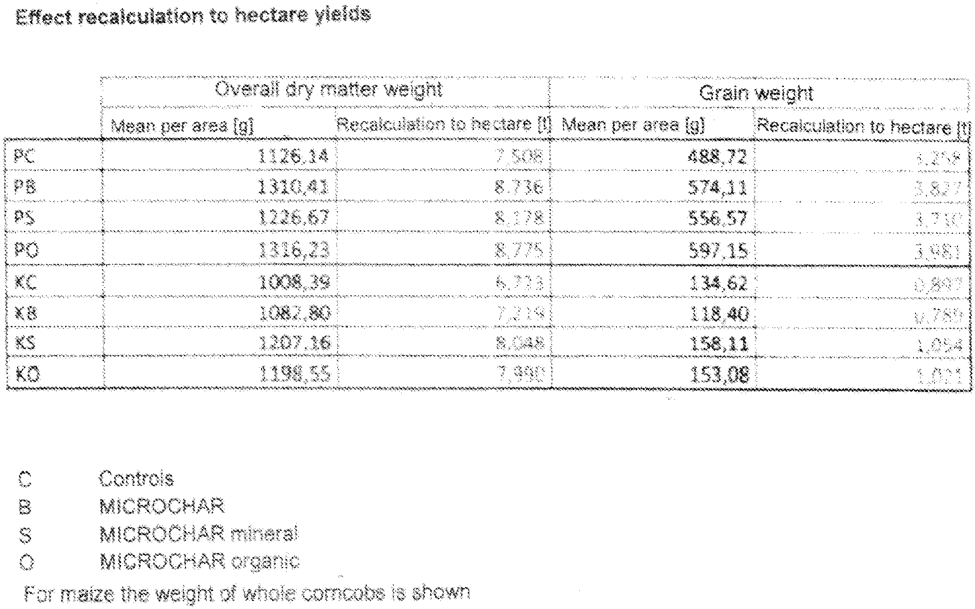

For all variants studied, plant dry matter and grain yields were at the level of high yields in organic farming.

The fertilizer was also analysed for the purpose of determining the levels of important elements, and the soil was similarly analysed after harvest to determine changes in the available nutrient content. It was found that the organic carbon content of the soil increased significantly after MicroCHAR mineral application and that the soil contained high levels of all forms of nitrogen. The MicroCHAR organic type in turn supplied the soil with high amounts of available potassium, calcium and magnesium. Compared to the untreated control, the soil supply of most of the important nutrients also increased after the growing season.

Furthermore, the available nutrient content of the conditioner samples was investigated in comparison with their condition after percolation (leasing). Percolation is the process of continuous flow of solvent through a sample on a filter.

2 g of the fertiliser (MicroCHAR, MicroCHAR mineral+, MicroCHAR organic+) were placed on a filtration paper for quantitative analysis of KA 2 and substances were extracted from the samples, by slow pouring of 10 mL of a solvent (distilled water) on them, into a 15mL

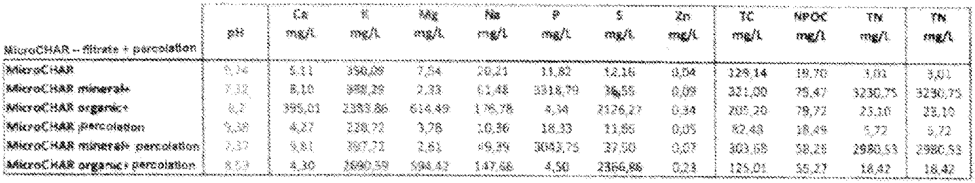

After the application of the MicroCHAR mineral fertiliser, the organic carbon content in the soil increased significantly. This fertiliser variant contains large amounts of all forms of nitrogen and is suitable as a nitrogen source. The MicroCHAR organic variant contains a high proportion of potassium, calcium and magnesium. A combination of both variants seems ideal.

The last factor observed was the development of mycorrhizal colonization of the roots of treated crops. The mycorrhizal colonization method determines the relative abundance of mycorrhizal fungi in a microscopic preparation of plant roots.

Wheat roots grown in soil treated with the conditioning samples were prepared using a standardized procedure. A magnification of 400× was used to view the stained roots spread on a microscope slide. Fields of view with visible mycorrhizal formations in the roots (arbuscules, vesicles, mycorrhizal fungal hyphae) were identified as positive. Significance or *p-value* methodology was used to evaluate the results - see https://enwikipedia.org/wiki/P-value. The colonization result from the control sample was assigned a p-value of 0.05 (5%). The quantity and frequency of mycorrhizal formations detected in all three compared variants were evaluated by the so-called chi-squared test by the mathematical R software. The development of mycorrhiza on the root systems of wheat grown in soil with the applied conditioner is shown in the diagram in Fig. 2.

All three samples show an increase in root colonization with a probability level equal to certainty. The best results were obtained with the application of the MicroCHAR organic variant. However, all three fertilizer variants tested significantly increased the formation of symbiosis with the native mycorrhizal population in the field soil compared to the control.

## Claims

1. A method of production of a granulated soil conditioner based on a mixture of biochar and organic fertiliser, wherein the conditioner is endowed with bacteria, mycorrhizal fungi and myco-parasitic fungus, **characterised in that** the method comprises the following steps:
- *mixing* the biochar obtained by thermal reduction of plant biomass or animal bones with animal excrements in the weight ratio of 1 part of biochar to 0.1 to 0.4 part of the excrement dry matter, mixing to this base a compound of soil bacteria including at least two of the group of:
Rhizobia genus bacteria,
nitrification bacteria of the Azospirillum or Azotobacter genus,
Pseudomonas genus bacteria,
Bacillus genus bacteria,
the weight of their dry matter at the concentration of CFU 10⁹ being 0.2 to 0.5 % of the base dry matter weight,
- *topping* the bacteria-endowed base up with water in the weight of not more than double the weight of the bacteria-endowed base and letting it ferment for at least 5 days,
- *draining* off the excess water and drying the base with bacteria for the water content not to exceed 20 wt%, thereupon adding to the base-bacteria compound a mixture of fungal spores including at least two of the group of: Trichoderma, arbuscular mycorrhizal fungi, ectomycorrhizal fungi in a total amount corresponding to 0.2 to 1 % of the base-bacteria compound dry matter weight,
- thereupon *mixing* the thus prepared mixture profoundly.

2. The method according to Claim 1, **characterised in that** a mixture of soil bacteria of the Azospirillum or Azotobacter genus and the Bacillus genus is added to the base, whereupon a mixture of fungal spores of the myco-parasitic fungi such as Trichoderma or Pythium, and arbuscular fungi such as the Glomus genus, or ectomycorrhizal fungi, such as the Pisolithus, Scleroderma or Rhizopogon genera, or, alternatively, fungi forming ericoid mycorrhizae, is added to the base-bacteria compound.

3. The method according to Claim 1, **characterised in that** a mixture of soil bacteria is added to the base in the following weight ratio:
25 % of the Rhizobia genus bacteria,
25% of nitrification bacteria of the Azospirillum or Azotobacter genus,
25 % of the Pseudomonas genus bacteria,
25 % of the Bacillus genus bacteria,
whereupon the bacteria-endowed base is topped up with water in the weight identical to the weight of the base with bacteria before fermentation, and further whereupon a mixture of fungal spores is added to the base with bacteria in the following weight ratio: 50 % of Arbuscular mycorrhizal fungi, 25 % of Ectomycorrhizal fungi and 25 % of Myco-parasitic fungi, such as Trichoderma.

4. The method according to any of Claims 1 to 3, **characterised in that** 0.1 to 0.3 part of mineral fertiliser is added to the base.

5. The method according to any of Claims 1 to 4, **characterised in that** starch in the quantity of 4 to 6 % of the base-bacteria compound dry matter weight is mixed with water at the boiling point temperature and this starch suspension, after cooling, is mixed to the base with bacteria and the base-bacteria-starch-mycorrhizal fungi compound is granulated in a granulator into the form of granules with a diameter of 1 to 5 mm.

6. A soil conditioner based on a mixture of biochar and organic fertiliser produced by the method according to one of Claims 1 to 4, **characterised in that** the conditioner contains a mixture of soil bacteria including at least three of the following group: Rhizobia, Azospirillum or Azotobacter, Pseudomonas and Bacillus, and the conditioner further contains a mixture of fungal spores including at least three of the following group:
Arbuscular mycorrhizal fungi, Ectomycorrhizal fungi, Myco-parasitic fungi.

7. The soil conditioner according to Claim 6, **characterised in that** the conditioner is in the form of granules with starch as a binder.

## Patentansprüche

1. Verfahren zur Herstellung eines granulierten Bodenverbesserungsmittels auf Basis einer Mischung von Biokohle und organischem Dünger, wobei das Bodenverbesserungsmittel mit Bakterien, Mykorrhizapilzen und mykoparasitären Pilzen angereichert ist, **dadurch gekennzeichnet, dass** das Verfahren die folgenden Schritte umfasst:
- Mischen der durch thermische Reduktion von Pflanzenbiomasse oder Tierknochen gewonnenen Biokohle mit Tierkot im Gewichtsverhältnis 1 Teil Biokohle zu 0,1 bis 0,4 Teilen Kot-Trockenmasse, Zumischen einer Mischung aus Bodenbakterien, die mindestens zwei der folgenden Gruppen enthält:
Bakterien der Gattung *Rhizobien,*
Nitrifikationsbakterien der Gattungen *Azospirillum* oder *Azotobacter,*
Bakterien der Gattung *Pseudomonas,*
Bakterien der Gattung *Bacillus,*
deren Trockenmassegewicht bei einer Konzentration von 10⁹ KBE 0,2 bis 0,5 % des Trockenmassegewichts der Basis beträgt,
- Auffüllen der mit Bakterien angereicherten Basis mit Wasser in einer Menge, die höchstens das Doppelte des Gewichts der mit Bacteria angereichten Basis beträgt, und Lassen es mindestens 5 Tage lang fermentieren,
- Abgießen überschüssiges Wassers und Trocknen der Basis mit den Bakterien, sodass der Wassergehalt 20 Gew.-% nicht übersteigt, anschließend Zumischen einer Pilzsporenmischung zu der Mischung der Basis mit den Bakterien, wobei die Pilzsporenmischung mindestens zwei der folgenden Gruppen enthält: Trichoderma, arbuskuläre Mykorrhizapilze und Ektomykorrhizapilze in einer Gesamtmenge von 0,2 bis 1 % des Trockengewichts der Mischung der Basis mit den Bakterien,
- anschließendes gründliches Mischen der so hergestellten Mischung.

2. Verfahren nach Anspruch 1, **dadurch gekennzeichnet, dass** eine Mischung aus Bodenbakterien der Gattungen Azospirillum oder Azotobacter und der Gattung Bacillus der Basis zugesetzt wird, woraufhin eine Mischung aus Pilzsporen der mykoparasitären Pilze wie Trichoderma oder Pythium und arbuskulären Pilzen wie Pilze der Gattung Glomus oder ektomykorrhizalen Pilzen wie Pilzen der Gattung Pisolithus, Scleroderma oder Rhizopogon oder alternativ Pilzen, die ericoide Mykorrhiza bilden, zu der Mischung der Basis mit den Bakterien zugesetzt wird.

3. Verfahren nach Anspruch 1, **dadurch gekennzeichnet, dass** eine Mischung von Bodenbakterien im folgenden Gewichtsverhältnis der Basis zugesetzt wird:
25 % Bakterien der Gattung Rhizobia,
25 % nitrifizierende Bakterien der Gattungen Azospirillum oder Azotobacter,
25 % Bakterien der Gattung Pseudomonas,
25 % Bakterien der Gattung Bacillus,
wobei die mit Bakterien angereicherte Basis mit Wasser in der gleichen Menge wie die Basis mit Bakterien vor der Fermentation aufgefüllt wird, und anschließend eine Mischung von Pilzsporen im folgenden Gewichtsverhältnis zugesetzt wird: 50 % arbuskuläre Mykorrhizapilze, 25 % ektomykorrhizale Pilze und 25 % mykoparasitäre Pilze, wie z. B. Trichoderma.

4. Verfahren nach einem der Ansprüche 1 bis 3, **dadurch gekennzeichnet, dass** der Basis 0,1 bis 0,3 Teile Mineraldünger zugesetzt werden.

5. Verfahren nach einem der Ansprüche 1 bis 4, **dadurch gekennzeichnet, dass** Stärke in einer Menge von 4 bis 6 % des Trockenmassegewichts der Mischung der Basis mit Bakterien mit Wasser bei Siedepunktstemperatur vermischt wird und diese Stärkesuspension nach dem Abkühlen mit der Basis mitd den Bakterien vermischt wird, und die Mischung von Basis, Bakterien, Stärke, Mykorrhiza, Pilz anschließend in einem Granulator zu Granulat mit einem Durchmesser von 1 bis 5 mm granuliert wird.

6. Ein Bodenverbesserungsmittel auf Basis einer Mischung aus Biokohle und organischem Dünger, hergestellt nach dem Verfahren gemäß einem der Ansprüche 1 bis 4, **dadurch gekennzeichnet, dass** das Bodenverbesserungsmittel eine Mischung aus Bodenbakterien enthält, darunter mindestens drei der folgenden Gruppen: Rhizobien, Azospirillum oder Azotobacter, Pseudomonas und Bacillus, und ferner eine Mischung aus Pilzsporen enthält, darunter mindestens drei der folgenden Gruppen: arbuskuläre Mykorrhizapilze, ektomykorrhizale Pilze und mykoparasitäre Pilze.

7. Das Bodenverbesserungsmittel nach Anspruch 6, **dadurch gekennzeichnet, dass** es in Form von Granulat mit Stärke als Bindemittel vorliegt.

## Revendications

1. Procédé de production de conditionneur de sol granulé basé sur un mélange de biochar et d'engrais organique, où le conditionneur est doté de bactéries, de champignons mycorhiziens et d'un champignon mycoparasite, **caractérisé en ce que** le procédé comprend les étapes suivantes :
- *mélanger* du biochar obtenu par réduction thermique de biomasse végétale ou d'os d'animaux avec des excréments d'animaux dans le rapport en poids de 1 partie de biochar à 0,1 à 0,4 parties de matière sèche d'excréments, puis mélanger un mélange de bactéries de sol à cette base, où le mélange de bactéries de sol comprend au moins deux types provenant du groupe de :
bactéries du genre Rhizobia,
bactéries de nitrification du genre Azospirillum ou Azotobacter,
bactéries du genre Pseudomonas,
bactéries du genre Bacillus,
où le poids de leur matière sèche à la concentration de CFU 10⁹ est 0,2 à 0,5 % du poids de la matière sèche de base,
- *ajouter* de l'eau dans la base dotée de bactéries, où le poids de l'eau ne dépasse pas deux fois le poids de la base dotée de bactéries, et laisser le fermenter pendant au moins 5 jours,
- *égoutter* l'excédent d'eau et sécher la base comprenant des bactéries afin que la teneur en eau ne dépasse pas 20 % en poids, puis ajouter au mélange de bactéries de base un mélange de spores fongiques comprenant au moins deux types provenant du groupe de : Trichoderma, champignons arbusculaires mycorhiziens, champignons ectomycorhiziens dans une quantité totale correspondant à 0,2 à 1 % du poids de la matière sèche du mélange de bactéries de base,
- puis *mélanger* soigneusement le mélange ainsi préparé.

2. Le procédé selon la revendication 1, **caractérisé en ce qu'un** mélange de bactéries de sol du genre Azospirillum ou Azotobacter et du genre Bacillus est ajouté à la base, après quoi un mélange de spores fongiques de champignons mycoparasites tels que Trichoderma ou Pythium, et de champignons arbusculaires tels que le genre Glomus, ou de champignons ectomycorhiziens tels que les genres Pisolithus, Scleroderma ou Rhizopogon, ou, alternativement, de champignons formant des mycorhizes éricoïdes, est ajouté au mélange de bactéries de base.

3. Le procédé selon la revendication 1, **caractérisé en ce qu'**un mélange de bactéries de sol est ajouté à la base dans le rapport en poids suivant :
25 % de bactéries du genre Rhizobia,
25 % de bactéries de nitrification du genre Azospirillum ou Azotobacter,
25 % de bactéries du genre Pseudomonas,
25 % de bactéries du genre Bacillus,
après quoi de l'eau est ajoutée à la base dotée de bactéries, où le poids de l'eau est identique au poids de la base comprenant des bactéries avant la fermentation, et après quoi un mélange de spores fongiques est également ajouté à la base comprenant des bactéries dans le rapport en poids suivant : 50 % de champignons arbusculaires mycorhiziens, 25 % de champignons ectomycorhiziens et 25 % de champignons mycoparasites tels que Trichoderma.

4. Le procédé selon l'une quelconque des revendications 1 à 3, **caractérisé en ce que** 0,1 à 0,3 parties d'engrais minéral sont ajoutées à la base.

5. Le procédé selon l'une quelconque des revendications 1 à 4, **caractérisé en ce que** de l'amidon dans la quantité de 4 à 6 % du poids de la matière sèche du mélange de bactéries de base est mélangé avec de l'eau à la température d'ébullition, et cette suspension d'amidon, après refroidissement, est mélangée à la base comprenant des bactéries, et le mélange de base de champignons mycorhiziens, de bactéries et d'amidon est granulé à l'aide d'un granulateur dans la forme de granules ayant un diamètre de 1 à 5 mm.

6. Conditionneur de sol basé sur un mélange de biochar et d'engrais organique produit par le procédé selon l'une quelconque des revendications 1 à 4, **caractérisé en ce que** le conditionneur comprend un mélange de bactéries de sol comprenant au moins trois types provenant du groupe suivant : Rhizobia, Azospirillum ou Azotobacter, Pseudomonas et Bacillus, où le conditionneur comprend également un mélange de spores fongiques comprenant au moins trois types provenant du groupe suivant : champignons arbusculaires mycorhiziens, champignons ectomycorhiziens, champignons mycoparasites.

7. Le conditionneur de sol selon la revendication 6, **caractérisé en ce que** le conditionneur est dans la forme de granules avec de l'amidon en tant que liant.
